# EUROPÄISCHE PATENTANMELDUNG

(11) **EP 2 322 885 A2**
(43) Veröffentlichungstag der Anmeldung: **18.05.2011**
(21) Anmeldenummer: 10014453.4
(22) Anmeldetag: 10.11.2010
(51) Int. Cl.: F25D 21/00

(54) **Wärmepumpenanlage**

(30) Priorität: 10.11.2009 DE 102009052409
(71) Anmelder: STIEBEL ELTRON GmbH & Co. KG, 37603 Holzminden (DE)
(72) Erfinder: Smollich, Steffen, 37603 Holzminden (DE); Schiefelbein, Kai, Dr., 37671 Höxter (DE); Schaumlöffel, Michael, 37671 Höxter (DE)

(57) **Zusammenfassung**

Die Erfindung betrifft ein Abtauverfahren bzw. eine Abtau-Erkennung bei einer Wärmepumpenanlage. Im Kältemittelkreislauf (KK) ist ein Verdampfer (10), ein Verflüssiger (20), ein Verdichter (30) und ein Expansionsventil (40) vorgesehen. Dem Verdampfer (10) wird ein Lüfter (200) und eine Lüftersteuereinheit (210) zugeordnet. Die Lüftersteuereinheit (210) misst den Strom und/oder eine Drehzahl des Lüfters (200) und erfasst einen Arbeitspunkt des Lüfters, basierend auf dem erfassten Strom und/oder der Drehzahl. Die Lüftersteuereinheit (210) ist ferner dazu ausgestaltet, den Arbeitspunkt des Lüfters (200) zu überwachen und bei Unter- bzw. Überschreiten eines Schwellwertes ein Abtau-Einleitungssigna an einen Regler (50) weiterzuleiten. Der Regler (50) ist dazu ausgestaltet, eine Abtaubetriebsart zum Abtauen des Verdampfers (10) und/oder des Lüfters (200) zu aktivieren.

## Beschreibung

Die vorliegende Erfindung betrifft eine Wärmepumpenanlage.

Als Wärmepumpen können beispielsweise Sole/Wasserwärmepumpen, Wasser/Wasserwärmepumpen oder Luft/Wasserwärmepumpen eingesetzt werden; wobei die Luft/Wasserwärmepumpen zunehmend an Bedeutung gewinnen. Bei einer derartigen Luft/Wasserwärmepumpe dient die Außenluft als Wärmequelle und wird beim Durchströmen durch den Verdampfer abgekühlt. Wenn die Lufttemperatur sinkt und der Wassergehalt der Luft konstant bleibt, so steigt die relative Luftfeuchte ϕ. Wenn die relative Luftfeuchte ϕ einen Wert von 100 % erreicht, so beginnt eine Kondensation. Die Luft weist eine Taupunkttemperatur von über 0°C auf, so dass Wasserdampf zunächst als Tropfen auf einer Wärmeübertragerfläche des Verdampfers auskondensiert. Die Tropfen können dann anwachsen, gefrieren jedoch nicht, obwohl die Rippentemperatur des Verdampfers unter 0°C liegen kann. Erst wenn die Tropfen genügend lange unterkühlt sind, können sie erstarren. Die Größe der Tropfen bei der Erstarrung hängt dabei von der tatsächlichen Unterkühlung ab. Stärkere Unterkühlungen ergeben kleinere Tropfen. Die Tropfenkondensation findet auch bei Taupunkttemperaturen oberhalb von 0°C statt, wobei erst bei sehr tiefen Temperaturen eine direkte Resublimation erfolgt.

Bei z. B. Lamellen-Rohrverdampfern verringert sich der luftseitige freie Strömungsquerschnitt, wenn die Eisschicht auf den Lamellen wächst. Dies kann durch den reduzierten Strömungsquerschnitt zu einer Steigerung des Druckabfalls am Verdampfer und somit zu einem reduzierten Luftvolumenstrom führen. Wenn der übertragene Wärmestrom *Q̇ = ṁ_{L} · cp_{,L} ·* (*t_{L,ein}* - *t_{L,aus}*) darstellt, so sinkt der Luftmassenstrom aufgrund des reduzieren Volumenstroms und somit auch der übertragene Wärmestrom. Durch den reduzierten Wärmestrom sinkt die Verdampfungstemperatur ab. Bei einem konstanten Massenstrom wird die zur Überhitzung zur Verfügung stehende Fläche im Verdampfer reduziert, und die Überhitzung des Kältemittels sinkt ab. Zur weiteren konstanten Aufrechterhaltung der Überhitzung muss der Öffnungsgrad des Expansionsventils reduziert werden. Dies kann jedoch zu einem geringeren Kältemittelmassenstrom führen, wodurch die Verdampfungstemperatur ansteigen kann. Somit kann wieder mehr Fläche in dem Verdampfer für die Überhitzung zur Verfügung stehen, und die Überhitzung steigt.

Die Reduzierung der Kältemittelverdampfungstemperatur reduziert die Leistungszahl der Wärmepumpe. Da eine gewisse Bereifung der Verdampferlamellen ohne Weiteres toleriert werden kann, findet eine Abtauung üblicherweise erst beim Überschreiten eines Grenzwertes statt, so dass eine bedarfsgesteuerte Abtauung bei unterschiedlichen Außenluftbedingungen erfolgen kann und trotzdem eine hohe mittlere Leistungszahl gewährleistet werden kann. Es sind aus dem Stand der Technik verschiedene Verfahren zum Erkennen eines Abtaubedarfs einer Wärmepumpe vorhanden.

DE 101 31 379 B4 zeigt ein Verfahren zur Steuerung des Abtauens eines Luft/Luft-Wärmetauschers. Der Wärmetauscher weist einen Zulüfter und einen Ablüfter auf, wobei die Drehzahl des Zulüfters und des Ablüfters bestimmt wird und durch Vergleich der jeweiligen Drehzahlen eine Drehzahlabweichung ermittelt wird. Anhand der Drehzahlabweichung kann ein Bedarf einer Abtaueinleitung ermittelt werden.

DE 29 26 777 beschreibt ein Verfahren zum Überwachen von Verdampfern bei Wärmepumpen. Zur Überwachung der Vereisung der Verdampfer wird ein Luftschraube-Windrad-Flügelrad vorgesehen, um die Luftdurchlässigkeit des Verdampfers zu ermitteln.

Es ist somit Aufgabe der vorliegenden Erfindung, eine Wärmepumpenanlage vorzusehen, welche eine verbesserte Abtauung des Verdampfers ermöglicht.

Diese Aufgabe wird durch eine Wärmepumpenanlage gemäß Anspruch 1 gelöst.

Somit wird eine Wärmepumpenanlage mit einem Kältekreislauf mit einem Verdampfer, einem Verflüssiger, einem Verdichter und einem Expansionsventil vorgesehen. Dem Verdampfer wird ein Lüfter und eine Lüftersteuereinheit zugeordnet. Die Lüftersteuereinheit misst den Strom und/oder eine Drehzahl des Lüfters und erfasst einen Arbeitspunkt des Lüfters basierend auf dem erfassten Strom und/oder der Drehzahl. Die Lüftersteuereinheit ist ferner dazu ausgestaltet, den Arbeitspunkt des Lüfters zu überwachen und bei Unter- bzw. Überschreiten eines Schwellwertes ein Abtaueinleitungssignal an den Regler weiterzuleiten. Der Regler ist dazu ausgestaltet, eine Abtaubetriebsart zum Abtauen des Verdampfers und/oder des Lüfters zu aktivieren.

Gemäß einem Aspekt der vorliegenden Erfindung weist der Lüfter einen Motor auf, der als ein elektrisch kommutierender Synchronmotor mit einer Konstant-Volumenstromregelung, als ein elektrisch kommutierender Motor mit einer Konstant-Drehzahlregelung oder als ein elektrisch kommutierender Synchronmotor mit einer Konstant-Momentregelung ausgestaltet ist.

Gemäß einem weiteren Aspekt der vorliegenden Erfindung ist der Lüfter als ein Axiallüfter, ein vorwärts gekrümmter Radiallüfter oder als ein rückwärts gekrümmter Radiallüfter ausgestaltet.

Die Erfindung betrifft somit den Gedanken, dass eine Vereisung bzw. Bereifung des Verdampfers einer Kältemaschine wie beispielsweise eine Wärmepumpe anhand einer Auswertung der Arbeitspunkte des Lüfters des Verdampfers erfolgen kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.

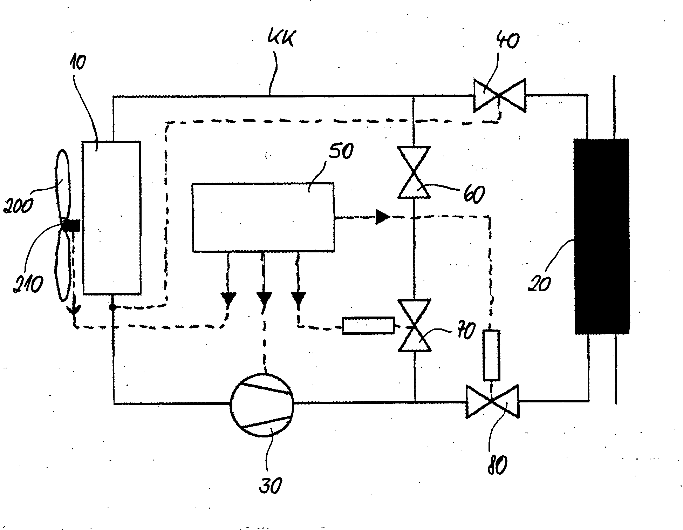

- Fig. 1: zeigt eine schematische Darstellung einer Wärmepumpenanlage ge- mäß einem ersten Ausführungsbeispiel.

Die Figur zeigt eine schematische Veranschaulichung eines Teiles einer Wärmepümpenanlage gemäß einem ersten Ausführungsbeispiel. Die Wärmepumpenanlage weist einen Kältemittelkreislauf KK und einen Verdampfer 10, einen Verflüssiger 20, einen Verdichter 30, ein Expansionsventil 40, einen Regler 50, eine Drossel 60 sowie ein erstes und zweites Magnetventil 70, 80 auf. Der Regler 50 dient beispielsweise dazu, die Drehzahl des Gebläses bzw. des Lüfters des Verdampfers zu regeln und den Verdichter 30 sowie das erste und zweite Magnetventil 70, 80 zu regeln. In der Normalbetriebsart ist z. B. das Magnetventil 80 geöffnet und das erste Magnetventil 70 geschlossen. Wenn der Regler 50 feststellt, dass ein Abtaubedarf des Verdampfers 10 vorliegt, dann kann in die Abtaubetriebsart umgeschaltet werden und das erste Magnetventil 70 wird geöffnet und das zweite Magnetventil 80 wird geschlossen. Nach der Abtauung erfolgt wiederum eine Umschaltung in die Normalbetriebsart.

Dem Verdampfer 10 ist ein Ventilator bzw. ein Lüfter 200 mit einer Lüftersteuereinheit 210 zugeordnet.

In der Normalbetriebsart fließt das Kältemittel vom Verdichter 30 über das zweite Magnetventil 80 durch den Verflüssiger 20, über das Expansionsventil 40 zu dem Verdampfer 10. In der Abtaubetriebsart fließt das Kältemittel hingegen von dem Verdichter 30 durch das Magnetventil 70 zu der Drossel 60 und anschließend zu dem Verdampfer 10. Somit wird die Wärme in dem Verdampfer abgegeben. Der Verflüssiger 20 kann daher im Abtaubetrieb überbrückt werden.

Die Lüftersteuereinheit 210 erfasst bzw. überwacht den Strombedarf und die Drehzahl des Lüfters 200 bzw. des darin eingebauten Motors. Anhand des aufgenommenen Stroms und der Drehzahl des Lüfters kann ein Arbeitspunkt des Lüfters hinsichtlich der Drehzahl, des Volumenstroms und der Druckdifferenz ermittelt werden. Wenn dieser Arbeitspunkt einen vorab bestimmten Schwellwert überschreitet bzw. unterschreitet, dann kann eine Abtauung des Verdampfers notwendig sein, da der Eisansatz an dem Verdampfer bzw. dem Lüfter 200 zu groß bzw. zu viel geworden ist.

Die Bereifung bzw. Vereisung des Verdampfers kann bei Lufttemperaturen unterhalb von 7 bis 10°C erfolgen. Wenn eine Bereifung bzw. Vereisung des Verdampfers vorhanden ist, dann nimmt der Strömungswiderstand für die Luft zu, und der Lüfter 200 muss eine höhere Druckdifferenz überwinden. Gleichzeitig wird jedoch auch der Luftvolumenstrom abnehmen. Dies kann zur Folge haben, dass der Arbeitspunkt des Lüfters verändert wird. Mit anderen Worten, eine Veränderung des Arbeitspunktes des Lüfters kann einen Hinweis darstellen, dass der Lüfter 200 bzw. der Verdampfer 10 bereift bzw. vereist ist und dass eine Abtauung des Lüfters bzw. des Verdampfers benötigt wird.

Der Lüfter 200 kann als ein Axiallüfter, ein vorwärts gekrümmter Radiallüfter (Trommelläufer) oder als ein rückwärts gekrümmter Radiallüfter ausgestaltet sein. Bei Axiallüftern und bei vorwärts gekrümmten Radiallüftern erhöht sich die Drehzahl des Lüfters bei steigendem Gegendruck wenn das Antriebsmoment konstant ist. Die Drehzahl ist maximal, wenn der Lüfter nichts mehr fördert. Somit kann beispielsweise eine Veränderung des Gegendrucks eines Lüfters detektiert werden.

Der Motor des Lüfters gemäß der Erfindung kann ein elektronisch kommutierender Synchronmotor mit einer Konstant-Volumenregelung darstellen. Hier ist eine Drehzahlerfassung sehr einfach, da ein derartiger Motor typischerweise einen Drehzahlsignal-Ausgang aufweist. Die Auswertung einer Änderung des Arbeitspunktes ist ebenfalls einfach, da eine Drehzahländerung aufgrund einer Anpassung des Volumenstroms bei steigendem Gegendruck erfasst werden kann.

Bei elektrisch kommutierenden Motoren mit einer Konstant-Drehzahlregelung ist die Drehzahlerfassung ebenfalls einfach, da derartige Motoren typischerweise über einen Drehzahlsignal-Ausgang verfügen. Eine Auswertung der Drehzahl ist jedoch nicht möglich, da die Drehzahl konstant gehalten wird. Eine Auswertung kann aber über die Erfassung des Stroms erfolgen.

Bei einem elektrisch kommutierenden Synchronmotor mit einer Konstant-Momentregelung ist die Drehzahlerfassung einfach, da ein Drehzahlsignal-Ausgang vorhanden ist. Die Drehzahlvarianz wird hierbei jedoch durch unterschiedliche Gegendrücke von der Drehzahlvarianz durch Netzspannungsschwankungen überlagert, so dass eine Auswertung schwieriger ist. Eine Auswertung kann dennoch erfolgen, wenn eine geeignete Kalibrierung vorgenommen wird.

Zum Abtauen einer Wärmepumpe bzw. des Verdampfers der Wärmepumpe kann z. B. ein Prozessumkehr-Abtauverfahren oder ein Heißgasabtauverfahren verwendet werden. Bei dem Prozessumkehr-Abtauverfahren wird der Kältekreislauf umgekehrt, so dass die verdichteten Heißgase nach dem Verdichter dem Verdampfer mit hohem Druck zugeführt werden, so dass die Heißgase am Verdampfer kondensieren. Hierdurch wird im Verdampfer Wärme freigesetzt, so dass der Verdampfer abtauen kann. Das verflüssigte Kältemittel kann dann in einem separaten Ventil, welches nur für die Abtauung verwendet wird, gedrosselt werden und fließt danach in den Kondensator bzw. den Verflüssiger. Dort wird das Kältemittel mit der Wärme vom Heizkreislauf verdampft, und von dem Verdichter angesaugt und verdichtet.

Bei der Heißgasabtauung einer Wärmepumpe wird der Verdampfer mit den Heißgasen geheizt, welche nach dem Verdichtungsprozess aus dem Verdichter austreten. Nach dem Verdichtungsprozess wird das Kältemittel gedrosselt, und das Heißgas strömt typischerweise durch eine Bypassleitung und tritt in den Verdampfer ein. Das Heißgas kann zuerst den Verdampfer sowie dessen Lamellen aufheizen, so dass sich darauf befindliches Eis schmelzen kann.

## Patentansprüche

1. Wärmepumpenanlage, mit
einem Kältekreislauf (KK) mit einem Verdampfer (10), einem Verflüssiger (20), einem Verdichter (30), einem Regler (50) und einem Expansionsventil (100),
wobei dem Verdampfer (10) ein Lüfter (200) und eine Lüftersteuereinheit (210) zugeordnet ist,
wobei die Lüftersteuereinheit (210) einen Strom und/oder eine Drehzahl des Lüfters (200) erfasst und einen Arbeitspunkt des Lüfters (200) basierend auf dem erfassten Strom und/oder der Drehzahl ermittelt,
wobei die Lüftersteuereinheit (210) dazu ausgestaltet ist, den Arbeitspunkt des Lüfters (200) zu überwachen und bei Unter- bzw. Überschreiten eines Schwellwertes ein Abtaueinleitungssignal an den Regler (50) weiterleitet,
wobei der Regler (50) dazu ausgestaltet ist, eine Abtaubetriebsart zum Abtauen des Verdampfers (10) und/oder des Lüfters (200) zu aktivieren.

2. Wärmepumpenanlage nach Anspruch 1, wobei
der Lüfter (200) einen Motor aufweist, der als ein elektrisch kommutierender Synchronmotor mit einer Konstant-Volumenstromregelung, als ein elektrisch kommutierender Motor mit einer Konstant-Drehzahlregelung oder als ein elektrisch kommutierender Synchronmotor mit einer Konstant-Momentregelung ausgestaltet ist.

3. Wärmepumpenanlage nach Anspruch 1 oder 2, wobei
der Lüfter als ein Axiallüfter, ein vorwärts gekrümmter Radiallüfter oder als ein rückwärts gekrümmter Radiallüfter ausgestaltet ist.
